# EUROPEAN PATENT APPLICATION

(11) **EP 4 682 122 A1**
(43) Date of publication of application: **21.01.2026**
(21) Application number: 24819523.2
(22) Date of filing: 28.05.2024
(51) Int. Cl.: C03C 4/00, F24C 15/10, H05B 6/12, C03C 10/00, G09F 9/33

(54) **COOKING APPLIANCE**

(30) Priority: 09.06.2023 KR 20230074342
(71) Applicant: LG ELECTRONICS INC., Yeongdeungpo-gu Seoul 07336 (KR)
(72) Inventor: AHN, Doyoung, Seoul 08592 (KR); KIM, Sangbeom, Seoul 08592 (KR); LEE, Donggi, Seoul 08592 (KR)
(74) Representative: Vossius & Partner Patentanwälte Rechtsanwälte mbB
(86) International application number: PCT/KR2024/007191
(87) International publication number: WO 2024/253371

(57) **Abstract**

The present disclosure relates to a cooking appliance and, for example, to a cooking appliance in which a display area is formed on a glass-ceramic substrate. The present disclosure relates to a cooking appliance having a display area, the cooking appliance comprising: a light source which is located in the display area and emits light defined by first coordinates on a CIE chromaticity diagram; and a glass-ceramic substrate which transmits the light emitted from the light source, thereby emitting light defined by second coordinates on the CIE chromaticity diagram, wherein the second coordinates may be located in the white region on the CIE chromaticity diagram.

## Description

### [Technical Field]

The present disclosure relates to a cooking appliance, for example, a cooking appliance in which a display area is implemented on a glass-ceramic substrate.

### [Background]

In general, cooking appliances may refer to products that cook food using electricity or other energy (e.g., gas) at home or indoors.

Among such cooking appliances, examples of cooking appliances that use gas as a heat source may include a gas cooktop, a gas oven, a gas oven range, or the like.

In one example, examples of cooking appliances that use electricity as the heat source include an induction cooktop, an electric cooktop using a radiant heater, a microwave, and the like. Another example thereof is a cooking appliance that combines the induction cooktop using electricity and the gas oven using gas.

For example, the induction cooktop or the electric cooktop using the radiant heater may have a display area defined in a portion of a heating area for the cooking.

A top plate of such an induction cooktop or electric cooktop using the radiant heater uses glass-ceramic that has excellent durability at high temperatures. Therefore, the display area may also be implemented on the same glass-ceramic.

Usually, such glass-ceramic may have a dark color, for example, a black color. In addition, the glass-ceramic has a relatively high transmittance in a specific wavelength band. For example, the glass-ceramic has a relatively high transmittance for light of a red wavelength range. Therefore, even when a white light source is used as lighting, white light may change in color to a color with a high transmittance when transmitted through the glass-ceramic.

For example, when displaying cooking information with the white light source, such white light may be perceived by a user as orange, pink, or red light after passing through the glass-ceramic. As such, light changes in the color while passing through the glass-ceramic. Such a change in the color may usually detract from aesthetics for the user.

As such, in a case of a glass-ceramic substrate, especially glass with thermal and strength characteristics used in the electric cooktop, when a white light-emitting diode (white LED) is used to implement white light, because of optical characteristics of the glass, corresponding light is perceived by the user in the orange or red color. Therefore, most displays in the cooking appliances are composed of red or orange LEDs.

However, as a demand for composite light, especially white light displays, has increased recently, attempts are being made to solve such a problem.

For example, attempts are being made to develop glass that provides uniform transmittance in a visible light range to implement white light in the display or to implement the same by applying a color correction film.

However, this results in addition of new components or application of expensive glass, which may increase structural complexity and material cost of the cooking appliance. In addition, this may worsen economic feasibility of the cooking appliance.

Therefore, a solution that may solve such problems is required.

### [Summary]

### [Technical Problem]

The present disclosure is to provide a cooking appliance that may implement a white light display in a cooking appliance using electricity.

The present disclosure is to provide a cooking appliance that may implement a white light display when using a glass-ceramic substrate that has a relatively high transmittance in a red wavelength band.

The present disclosure is to provide a cooking appliance that may implement a white light display without increased structural complexity or an expensive glass-ceramic substrate.

In addition, the present disclosure is to provide a cooking appliance that may implement a white light display without requiring an additional component and/or an improvement of a glass even when using a glass-ceramic substrate that has a relatively high transmittance in a red wavelength band.

### [Technical Solutions]

As a first aspect to solve the above problems, the present disclosure provides a cooking appliance having a display area including a light source that is positioned within the display area and emits light defined by a first coordinate on a CIE chromaticity diagram, and a glass-ceramic substrate constructed to transmit light emitted from the light source therethrough and emit light defined by a second coordinate on the CIE chromaticity diagram, wherein the second coordinate is positioned within a white color area on the CIE chromaticity diagram.

In one implementation, the first coordinate may be located within a bluegreen (or bluish green) color area on the CIE chromaticity diagram.

In one implementation, the first coordinate (x, y) may have one of values of following coordinates (x, y).

| x | y |
|---|---|
| 0.179 | 0.222 |
| 0.181 | 0.269 |
| 0.181 | 0.251 |
| 0.164 | 0.187 |
| 0.210 | 0.274 |
| 0.165 | 0.198 |
| 0.168 | 0.202 |
| 0.172 | 0.2205 |
| 0.1268 | 0.272 |
| 0.174 | 0.200 |

In one implementation, the second coordinate (x, y) may have one of values of following coordinates (x, y).

| x | y |
|---|---|
| 0.278 | 0.344 |
| 0.31 | 0.349 |
| 0.299 | 0.342 |
| 0.240 | 0.264 |
| 0.363 | 0.355 |
| 0.247 | 0.277 |
| 0.250 | 0.290 |
| 0.2809 | 0.2956 |
| 0.2909 | 0.3229 |
| 0.302 | 0.296 |

In one implementation, the light source may include at least one of a first light source in a form of a point light source and a second light source having a shape capable of representing a number.

In one implementation, the second light source may include a reflective layer, an optical film positioned on the reflective layer and having a slit defined therein with the shape capable of representing the number, and a light-emitting element positioned at a location corresponding to an area of the slit.

In one implementation, at least one of the first light source and the second light source may be located on a circuit board.

In one implementation, the second light source may extend through the circuit board.

In one implementation, the glass-ceramic substrate may have a relatively high transmittance in a red color band.

In one implementation, the glass-ceramic substrate may have a transmittance equal to or higher than 2% at a wavelength equal to or higher than 600nm.

In one implementation, the transmittance may increase as the wavelength increases in a wavelength band equal to or higher than 600nm.

In one implementation, the cooking appliance may further include a cooking area located on one side of the display area.

In one implementation, the display area may include a first display area positioned on a plane the same as a plane of the cooking area, and a second display area positioned on a plane different from the plane of the cooking area.

As a second aspect to solve the above problems, the present disclosure provides a cooking appliance having a display area including a glass-ceramic substrate including the display area and having a first optical transmittance, and a light source that is positioned within the display area, emits light defined by a first coordinate on a CIE chromaticity diagram, and emits light having one of following coordinates (x, y) by a second coordinate (x, y) on the CIE chromaticity diagram after transmitting the glass-ceramic substrate.

| x | y |
|---|---|
| 0.278 | 0.344 |
| 0.31 | 0.349 |
| 0.299 | 0.342 |
| 0.240 | 0.264 |
| 0.363 | 0.355 |
| 0.247 | 0.277 |
| 0.250 | 0.290 |
| 0.2809 | 0.2956 |
| 0.2909 | 0.3229 |
| 0.302 | 0.296 |

### [Advantageous Effects]

According to the exemplary embodiment of the present disclosure, the white light display may be implemented when the glass-ceramic substrate having the relatively high transmittance in the red wavelength band is used.

In addition, the user may observe the white light display without the increased structural complexity or the expensive glass-ceramic substrate in the white light display.

Therefore, even when the glass-ceramic substrate having the relatively high transmittance in the red wavelength band is used, the additional component and/or the improvement in the glass are not required, so that the structure may be simplified and the economic feasibility may be improved.

Accordingly, the market demand may be responded and white light may be observed in the wide range of display product groups especially in the electric cooktop market, thereby expanding the design possibilities.

Furthermore, according to another embodiment of the present disclosure, there are additional technical effects not mentioned herein. Those skilled in the art may understand this through the entire purpose of the present document and drawings.

### [Brief Description of the Drawings]

FIG. 1 is a perspective view showing a cooking appliance according to an embodiment of the present disclosure.
FIG. 2 is a perspective view of a first cooking unit of a cooking appliance according to an embodiment of the present disclosure.
FIG. 3 is a plan view of a first cooking unit of a cooking appliance according to an embodiment of the present disclosure.
FIG. 4 is an enlarged view of a portion A in FIG. 3.
FIG. 5 is a schematic cross-sectional view showing an example of a first cooking unit of a cooking appliance according to an embodiment of the present disclosure.
FIG. 6 is a schematic cross-sectional view showing another example of a first cooking unit of a cooking appliance according to an embodiment of the present disclosure.
FIG. 7 is a plan view showing a second light source of a cooking appliance according to an embodiment of the present disclosure.
FIG. 8 is a perspective view showing a second light source of a cooking appliance according to an embodiment of the present disclosure.
FIG. 9 is a partially cut-away perspective view showing a second light source of a cooking appliance according to an embodiment of the present disclosure.
FIG. 10 is a plan view showing an example of a second cooking unit of a cooking appliance according to an embodiment of the present disclosure.
FIG. 11 is a cross-sectional view taken along a line C-C in FIG. 10.
FIG. 12 shows a CIE chromaticity diagram.
FIG. 13 is a graph showing a transmittance curve of a glass-ceramic substrate of a cooking appliance according to an embodiment of the present disclosure.

### [Best Mode]

Hereinafter, embodiments disclosed herein will be described in detail with reference to the attached drawings, and regardless of drawing numbers, identical or similar components will be given the same reference numerals and redundant descriptions thereof will be omitted. Suffixes "module" and "unit" used for components in the following description are given or used interchangeably only for convenience of writing the present document, and do not have distinct meanings or roles in themselves. In addition, when describing the embodiments disclosed herein, when it is determined that a specific description of a related known technology may obscure the gist of the embodiments disclosed herein, a detailed description thereof will be omitted. In addition, it should be noted that the attached drawings are only intended to facilitate easy understanding of the embodiments disclosed herein, and that the technical ideas disclosed herein should not be construed as being limited by the attached drawings.

Furthermore, although each drawing is described for convenience of description, it is also within the scope of the present disclosure that a person skilled in the art implements another embodiment by combining at least two drawings.

Further, when an element such as a layer, an area, or a substrate is referred to as being present "on" another element, it will be understood that it may be present directly on another element or that there may be an intermediate element therebetween.

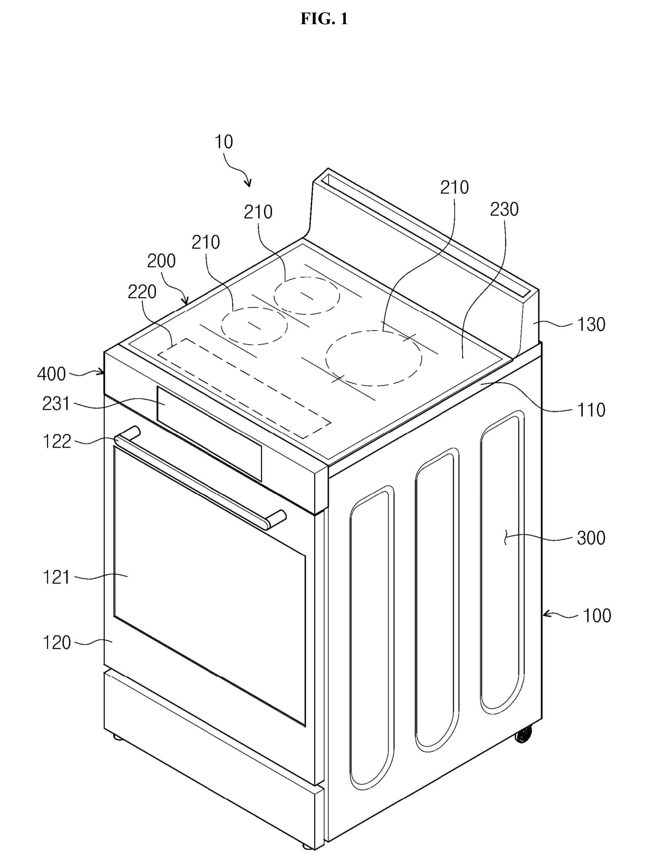

FIG. 1 is a perspective view showing a cooking appliance according to an embodiment of the present disclosure.

Hereinafter, for convenience of description, a cooking appliance that uses electricity as a heat source will be described as an example. In addition, in FIG. 1, an X-axis direction is defined as a width direction, a Y-axis direction as a height direction, and a Z-axis direction as a front and rear direction, respectively.

Referring to FIG. 1, a cooking appliance 10 according to an embodiment of the present disclosure includes a cabinet 100 forming an outer appearance of the appliance, and a first cooking unit 200 disposed at an upper portion of the cabinet 100 and including a cooking area 210 and a display area 220. Such a first cooking unit 200 may also be referred to as a cooking appliance. The display area 220 defined in such a first cooking unit 200 may be referred to as a first display area.

In FIG. 1, a top surface of the first cooking unit 200 installed on the cabinet 100 is mainly illustrated.

In addition, the cooking appliance 10 may include a second cooking unit 300 disposed inside the cabinet 100. A door 120 that opens and closes the second cooking unit 300 may be disposed at a front side of the cabinet 100. A viewing window 121 for viewing inside of the second cooking unit 300 may be located on the door 120. A door handle 122 may be located at an upper side of the door 120.

As such, a space for accommodating the second cooking unit 300 in which cooking is performed using a heat source may be defined inside the cabinet 100.

The first cooking unit 200 may be installed on a top plate 110 of the cabinet 100. For example, the first cooking unit 200 may be seated and installed in an opening defined in the top plate 110.

The first cooking unit 200 may be equipped with at least one cooking area 210 in which the cooking may be performed using the heat source. For example, the first cooking unit 200 may include three cooking areas 210.

Electricity or gas may be used as the heat source of the first cooking unit 200 and the second cooking unit 300. Hereinafter, as an exemplary embodiment, a case in which the heat source driven by electricity is used as the heat sources of the first cooking unit 200 and the second cooking unit 300 will be described.

For example, the first cooking unit 200 may be equipped with an induction heater or a radiant heater. For example, the second cooking unit 300 may be equipped with an electric heater.

A configuration of such a cooking unit using electricity is generally known by names such as an induction cooktop, an electric cooktop, and an electric oven, so that a detailed description thereof will be omitted.

In one example, the cooking appliance 10 may include a rear panel 130 installed at a rear of an upper portion of the cabinet 100. The rear panel 130 may be formed integrally with the top plate 110, or may be manufactured separately from the top plate 110 and installed at the rear side of the upper portion of the cabinet 100.

A second display area 400 may be located at the front side of the cabinet 100, for example, at a front side of the second cooking unit 300. Such a second display area 400 may be located between a lower side of the first cooking unit 200 and the door 120.

At least one of the first display area 220 and the second display area 400 may be implemented by a touch panel. For example, at least one of the first cooking unit 200 and the second cooking unit 300 may be operated by a touch input of a user. As another example, the second cooking unit 300 may include a rotatable knob-type manipulator.

At least one of the first display area 220 and the second display area 400 may display a state of each cooking unit 200 and 300 related to the cooking. For example, the first display area 220 and the second display area 400 may display information regarding the cooking performed in each cooking unit 200 and 300 (e.g., a cooking course and a cooking time).

As an example, the first display area 220 may display on/off, a heating stage, a setting time, and other settings of the cooking area 210. In addition, as an example, the second display area 400 may display on/off, a heating stage, a setting time, and other settings of the second cooking unit 300, as well as a cooking mode, an expected cooking time, and the like.

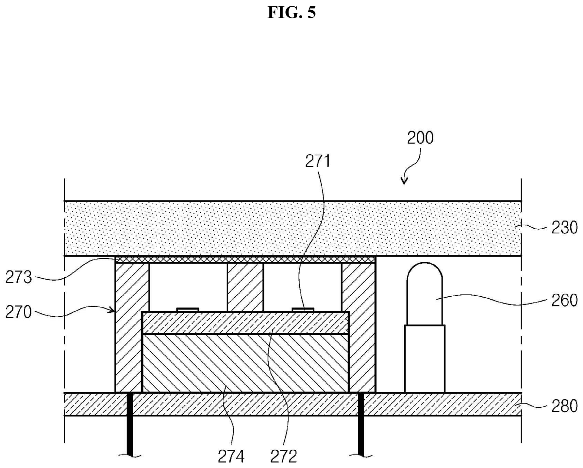

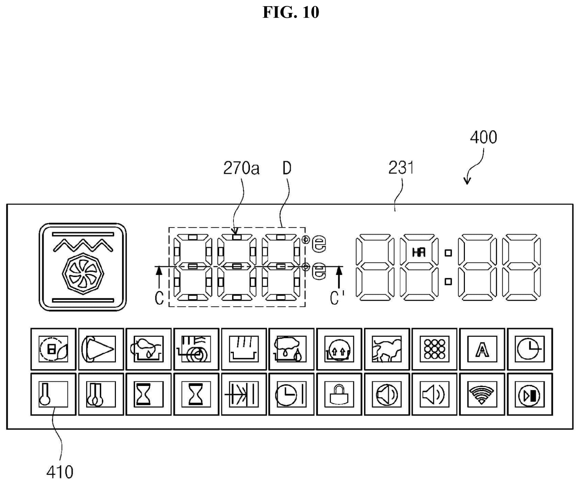

At least one of the first display area 220 and the second display area 400 may include a light source 260 and 270 (see FIG. 5) and a glass-based substrate 230 and 231 (see FIGS. 5 and 10) through which light emitted from the light source is transmitted and light for display is emitted. As a specific example, the glass-based substrate 230 may be a glass-ceramic substrate 230.

As an embodiment, the light source 260 and 270 that emits light defined by a first coordinate on a CIE chromaticity diagram, and the glass-ceramic substrate 230 through which light emitted from such a light source 260 and 270 is transmitted and thus light defined by a second coordinate on the CIE chromaticity diagram is emitted may be included in the first display area 220 of the first cooking unit 200.

In an exemplary embodiment, the first coordinate may be located within a bluegreen (or bluish green) color area on the CIE chromaticity diagram. In this regard, the second coordinate may be located within a "white color area" on the CIE chromaticity diagram.

Usually, such a glass-ceramic substrate 230 has a dark color, for example, a black color, and has a relatively high transmittance for light of a red wavelength range. Therefore, even when a white light source is used as lighting, light from the white light source has a red color when transmitted through the glass-ceramic substrate.

For example, when cooking information is displayed using the white light source, the user may perceive orange, pink, or red light. As such, light undergoes a color change while being transmitted through the glass-ceramic substrate.

However, according to the embodiment of the present disclosure, light emitted by the light source 260 and 270 that emits light defined by the first coordinate may be perceived as white light after passing through the glass-ceramic substrate 230. That is, light emitted by the light source 260 and 270 is emitted as light at a coordinate located in the "white color area" on the CIE chromaticity diagram after passing through the glass-ceramic substrate 230.

For example, the first coordinate may be located within the bluegreen (or bluish green) color area on the CIE chromaticity diagram. For example, the first coordinate may have one of following coordinates (x, y).

| x | y |
|---|---|
| 0.179 | 0.222 |
| 0.181 | 0.269 |
| 0.181 | 0.251 |
| 0.164 | 0.187 |
| 0.210 | 0.274 |
| 0.165 | 0.198 |
| 0.168 | 0.202 |
| 0.172 | 0.2205 |
| 0.1268 | 0.272 |
| 0.174 | 0.200 |

Further, as an example, the second coordinate may have a value of one of following coordinates (x, y). Such a second coordinate may be a coordinate located within the "white color area" above.

| x | y |
|---|---|
| 0.278 | 0.344 |
| 0.31 | 0.349 |
| 0.299 | 0.342 |
| 0.240 | 0.264 |
| 0.363 | 0.355 |
| 0.247 | 0.277 |
| 0.250 | 0.290 |
| 0.2809 | 0.2956 |
| 0.2909 | 0.3229 |
| 0.302 | 0.296 |

As an embodiment, a light source 270a (see FIG. 10) that emits light defined by the first coordinate on the CIE chromaticity diagram and the glass-ceramic substrate 231 (see FIG. 10) that transmits light emitted from such a light source 270a and thus emits light defined by the second coordinate on the CIE chromaticity diagram may be included in the second display area 400 of the second cooking unit 300.

As an example, the glass-ceramic substrate 230 and 231 includes a glass-ceramic that exhibits low-scattering of visible light. In the context of the present disclosure, a volume-colored glass-ceramic is a glass-ceramic having a luminous transmittance lower than 80% and including a single or multiple oxides of a transition metal of groups 5 to 11 of the periodic table as a coloring component. These include, in particular, V₂O₅, Cr₂O₃, Fe₂O₃, CoO, NiO, CuO, and MoO₃. A certain other chemical element may also act to color the glass-ceramic, and an example thereof is an oxide of a lanthanide element, more particularly Nd₂O₃. As a result of such a coloring component, the glass-ceramic absorbs light. Based on such absorption, the luminous transmittance is lower than 80%. Because of a process by which the glass-ceramic is produced, the component is distributed substantially homogeneously in the glass-ceramic. Thus, the coloring component results in a homogeneous coloration in the volume of the glass-ceramic.

This distinguishes between opaque glass-ceramic, which exhibits a reduced light transmittance because of significant scattering of visible light, and the transparent volume-colored glass-ceramic. The light scattering of the opaque glass-ceramic is a result of the number, a size, and a refractive index of crystals within the glass-ceramic. Thus, it is a result of a microstructure of the glass-ceramic.

The transparent volume colored glass-ceramic also differs from transparent uncolored glass-ceramic in that it has lower luminous transmittance. The uncolored glass-ceramic has luminous transmittances higher than 80%. It contains the coloring component only as an unavoidable impurity based on a raw material used in production thereof, or in a very small amount to fine-tune optical properties of the transparent uncolored glass-ceramic.

The glass-ceramic substrate 230 and 231 used in the present disclosure includes 58wt% to 72wt% SiO₂, 16wt% to 26wt% Al₂O₃, and 10wt% to 55wt% Li₂O. Such three components are required in these amounts to establish a typical microstructure of lithium aluminum silicate glass-ceramic as well as to achieve associated low thermal expansion.

The cooking unit including the display area that includes such light source and glass-ceramic substrate will be described in detail below.

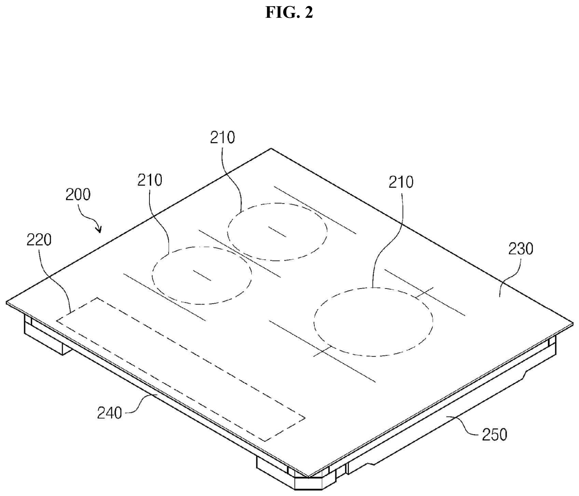

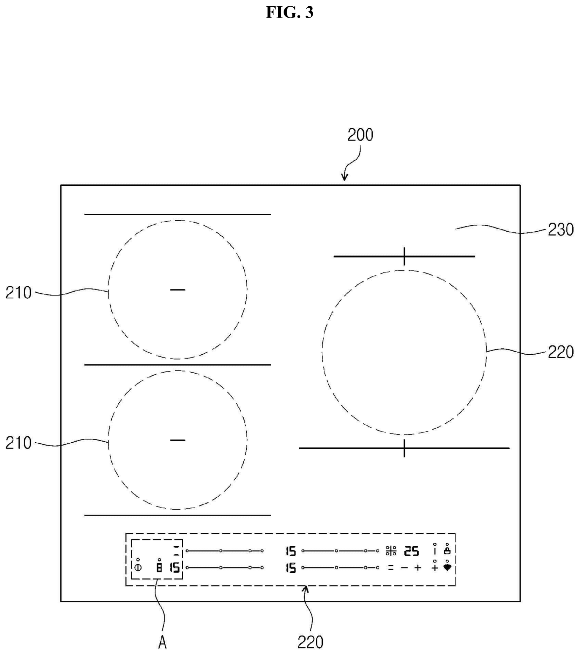

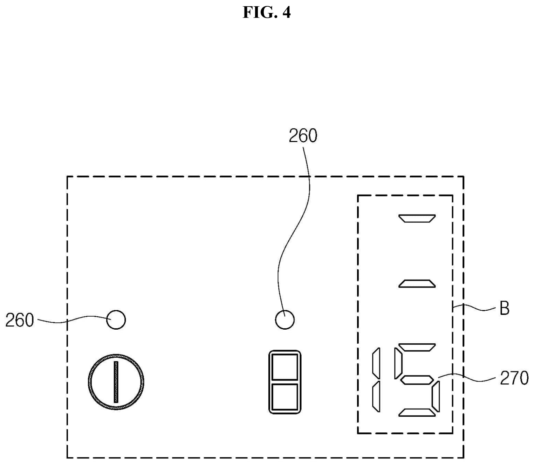

FIG. 2 is a perspective view of a first cooking unit of a cooking appliance according to an embodiment of the present disclosure. FIG. 3 is a plan view of a first cooking unit of a cooking appliance according to an embodiment of the present disclosure. FIG. 4 is an enlarged view of a portion A in FIG. 3.

Hereinafter, with reference to FIGS. 2 to 4, the first cooking unit 200 of the cooking appliance according to an embodiment of the present disclosure will be described in detail.

Referring to FIG. 2, as described above, the first cooking unit 200 may be equipped with the at least one cooking area 210 in which the cooking may be performed using the heat source. For example, the first cooking unit 200 may include the three cooking areas 210. Maximum heating capacities of such three cooking areas 210 may be different from each other.

Such a cooking area 210 may be equipped with the induction heater or the radiant heater. The cooking area 210 may be formed on the glass-ceramic substrate 230. Such a glass-ceramic substrate 230 may be identical to the glass-ceramic substrate 230 located beneath the first display area 220. For example, the cooking area 210 and the first display area 220 may be formed on the single glass-ceramic substrate 230.

The first cooking unit 200 may include an electrical component portion 240 where the induction heater or the radiant heater is disposed, and a support 250 that supports the electrical component portion 240. A detailed description thereof will be omitted.

Referring to FIG. 3, as described above, the first display area 220 may be implemented as the touch panel.

In addition, the light source 260 and 270 that displays the state of each cooking area 210 may be positioned in the first display area 220. Light emitted from such a light source 260 and 270 may pass through the glass-ceramic substrate 230 and be viewed externally.

The first display area 220 may display the state of each cooking area 210, for example, the heating stage, the setting time, and other settings. A detailed description of the state of each cooking area 210 as such will be omitted. The state of each cooking area 210 may be displayed by the light source 260 and 270.

Such a light source 260 and 270 may include at least one of a first light source 260 in a form of a point light source and a second light source 270 having a shape capable of representing a number.

In this regard, the first light source 260 in the form of the point light source may represent, for example, power of the first cooking unit 200 or on/off of each cooking area 210, an increase/decrease of a setting stage, and the like.

In one example, the second light source 270 having the shape capable of representing the number is generally disposed in a shape of an 8, thereby representing the setting stage in a number or representing a timer or the like.

As described above, the first light source 260 and the second light source 270 may emit light of a specific color so as to emit white light after light passes through the glass-ceramic substrate 230. Such light of the specific color may be light of the bluegreen or bluish green color. Such light of the specific color may be expressed by the first coordinate described above.

As an example, the first light source 260 may include a single light-emitting diode (LED) package that emits light of the bluegreen or bluish green color.

In one example, in the second light source 270, a light-emitting diode (LED) that emits light of the bluegreen or bluish green color may be disposed in each segment to represent the shape of 8.

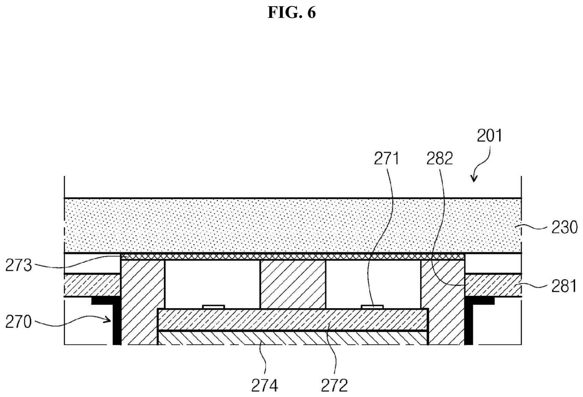

FIG. 5 is a schematic cross-sectional view showing an example of a first cooking unit of a cooking appliance according to an embodiment of the present disclosure. FIG. 6 is a schematic cross-sectional view showing another example of a first cooking unit of a cooking appliance according to an embodiment of the present disclosure.

FIG. 5 schematically shows a cross-section of the first display area 220 of the first cooking unit 200.

Referring to FIG. 5, the first light source 260 and the second light source 270 may be disposed on a circuit board 280 in the first display area 220, and the glass-ceramic substrate 230 may be positioned on such first light source 260 and second light source 270.

As described above, the first light source 260 may include the single light-emitting diode (LED) package that emits light of the bluegreen or bluish green color. A detailed description of such an LED package will be omitted.

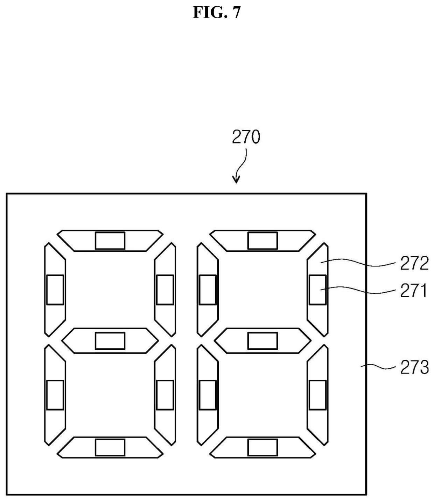

The second light source 270 may be constructed by mounting a light-emitting element 271 such as a light-emitting diode on a substrate 272 located inside a reflective layer 274 having a roughly rectangular parallelepiped structure. In this regard, an optical film 273 having a slit 275 (see FIG. 7) having a shape capable of representing the number may be positioned on the light-emitting element 271.

As illustrated, the second light source 270 may be positioned in contact with the glass-ceramic substrate 230.

In one example, referring to FIG. 6, a first cooking unit 201 according to another embodiment is shown. Here, the second light source 270 may extend through a circuit board 281. For example, a through hole 282 may be defined in the circuit board 281, and the second light source 270 may be positioned within such a through hole 282. In this regard, the second light source 270 may have the same structure as that in the example described above. Here, the first light source 260 is omitted.

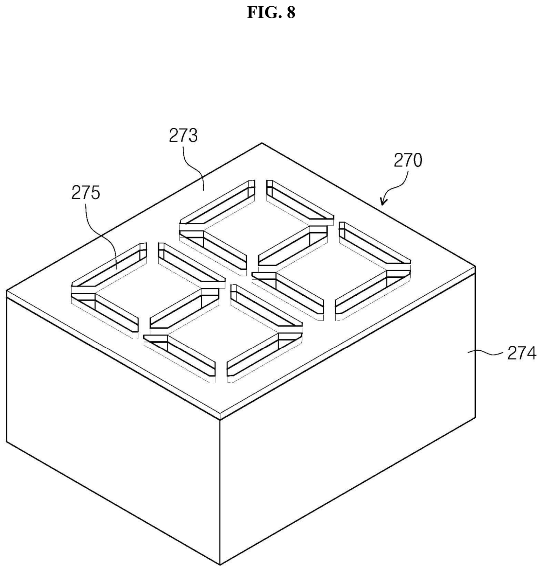

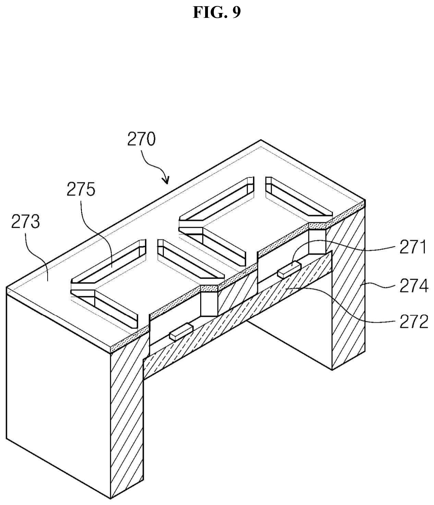

FIG. 7 is a plan view showing a second light source of a cooking appliance according to an embodiment of the present disclosure. FIG. 8 is a perspective view showing a second light source of a cooking appliance according to an embodiment of the present disclosure. FIG. 9 is a partially cut-away perspective view showing a second light source of a cooking appliance according to an embodiment of the present disclosure.

Referring to FIGS. 7 to 9, the second light source 270 may include the reflective layer 274, the optical film 273 formed with the slit 275 having the shape capable of representing the number and positioned on the reflective layer 274, and the light-emitting element 271 positioned at a location corresponding to an area of the slit 275.

The reflective layer 274 may form the roughly rectangular parallelepiped structure having a space defined inside. The substrate 272 on which the light-emitting element 271, such as the light-emitting diode, is mounted may be installed in such an inner space. For example, two segments of the slit 275 forming the shape of 8 may be disposed on one reflective layer 274 structure. In each segment of the slit 275, the light-emitting element 271 may be positioned at an approximately central location.

For example, to form the shape of 8, seven individual segments may be constructed. That is, when all light-emitting elements disposed within such seven individual segments are illuminated, the shape of 8 may be displayed.

The light-emitting element 271 may emit light of the bluegreen or bluish green color. Such light of the bluegreen or bluish green color may be expressed by the first coordinate described above.

A location where such a light-emitting element 271 is installed may correspond to the area of the slit 275 implemented in the optical film 273.

In one example, as another example, the slit 275 may be implemented at a location other than in the optical film 273. For example, the slit 275 may be defined inside the reflective layer 274 structure.

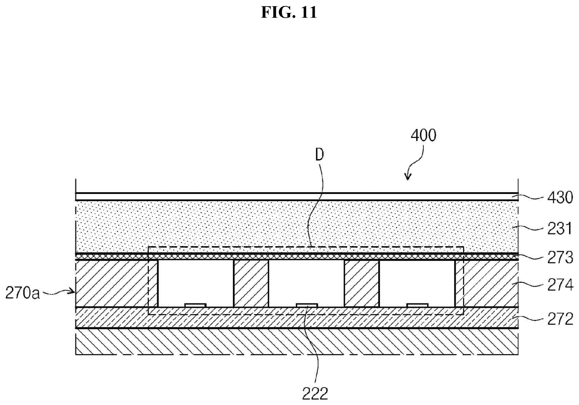

FIG. 10 is a plan view showing an example of a second cooking unit of a cooking appliance according to an embodiment of the present disclosure. FIG. 11 is a cross-sectional view taken along a line C-C in FIG. 10.

FIG. 10 shows an example of the second display area 400 that may display a state of the second cooking unit 300 or operate the second cooking unit 300.

Referring to FIG. 10, various touch areas 410 for controlling the second cooking unit 300 may be located in the second display area 400. In addition, a display area D that displays cooking information regarding the cooking state of the second cooking unit 300 may be located in the second display area 400.

The first light source 260 as described above may be installed in the display area D of the second display area 400. Here, the first light source 260 is omitted. In addition, a second light source 271 capable of representing the number may be installed in the display area D.

The glass-ceramic substrate 231 may be located in the second display area 400. Accordingly, light emitted from the second light source 271 may be viewed by passing through such a glass-ceramic substrate 231.

Here, a state in which three second light sources 271 capable of representing the number 8 are installed is shown. Such a second light source 271 may have substantially the same structure as the second light source 270 described above.

Referring to FIG. 11, as an example, the second light source 271 like the light-emitting diode may be mounted on the substrate 272 located inside the reflective layer 274 that forms the roughly rectangular parallelepiped structure. In this regard, the optical film 273 having the slit 275 (see FIG. 7) having the shape capable of representing the number may be positioned on the light-emitting element 271.

As illustrated, the second light source 271 may be positioned in contact with the glass-ceramic substrate 231.

In addition, the various touch areas 410 or a graphic layer 430 for displaying the cooking information may be positioned on the glass-ceramic substrate 231.

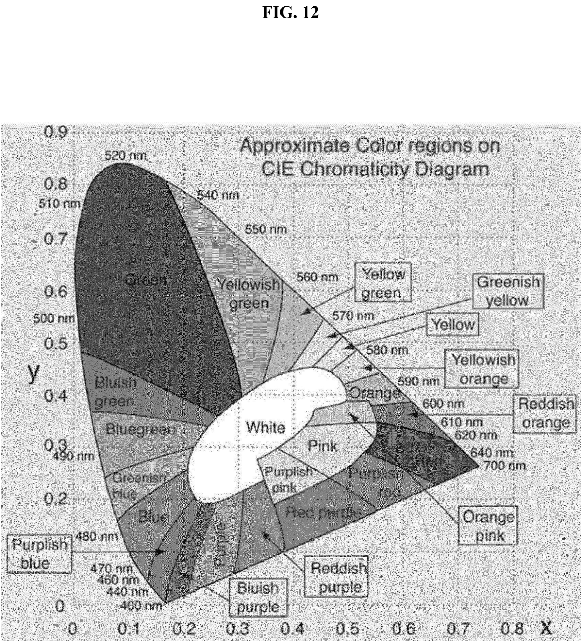

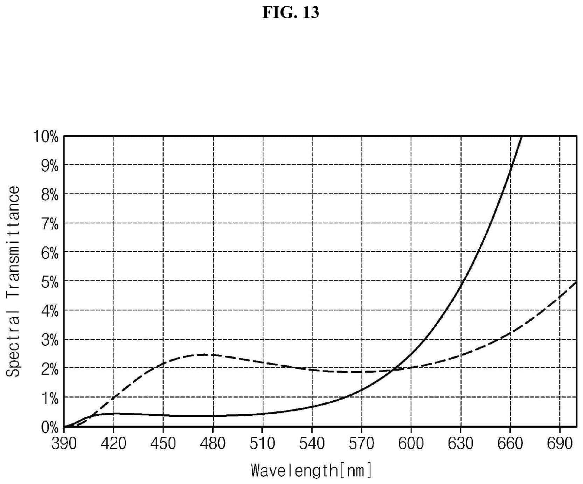

FIG. 12 shows a CIE chromaticity diagram. FIG. 13 is a graph showing a transmittance curve of a glass-ceramic substrate of a cooking appliance according to an embodiment of the present disclosure.

As described above, as an embodiment, the light source 260 and 270 that emits light defined by the first coordinate on the CIE chromaticity diagram, and the glass-ceramic substrate 230 that transmits light emitted from such a light source 260 and 270 and thus emits light defined by the second coordinate on the CIE chromaticity diagram may be included in the first display area 220 of the first cooking unit 200.

As an embodiment, the light source 270a (see FIG. 10) that emits light defined by the first coordinate on the CIE chromaticity diagram and the glass-ceramic substrate 231 (see FIG. 10) that transmits light emitted from such a light source 270a and thus emits light defined by the second coordinate on the CIE chromaticity diagram may be included in the second display area 400 of the second cooking unit 300.

Here, the first coordinate may be located within the bluegreen (or bluish green) color area on the CIE chromaticity diagram illustrated in FIG. 12. In this regard, the second coordinate may be located within the "white color area" on the CIE chromaticity diagram.

Referring to FIG. 13, transmittance curves of two glass-ceramic substrates are shown. Here, a solid line represents a graph of a glass-ceramic substrate (a CERAN HIGHTRANS eco product; a first substrate) having a relatively high transmittance in the red color band. A dotted line represents a graph of a glass-ceramic substrate (a LuminoirTM product; a second substrate) having a transmittance that increases in the red color band, but is relatively low.

Here, it may be seen that the first substrate has a transmittance equal to or higher than 2% at a wavelength equal to or higher than 600nm. In addition, the transmittance of such a first substrate may increase as the wavelength increases in the wavelength band equal to or higher than 600nm.

According to the embodiment of the present disclosure, even when the glass-ceramic substrate having the relatively high transmittance in the red color band is used, light transmitted through such a glass-ceramic substrate may be located within the "white color area" on the CIE chromaticity diagram.

Here, the CIE chromaticity diagram refers to a diagram of a CIExyY color space that is the basis of a CIE 1931 chromaticity diagram. Tristimulus values X, Y, and Z in a CIEXYZ may be converted to x, y, and Y values in the CIExyY color space, and therefore a standard light source may also be expressed as the x, y, and Y values. That is, it may be expressed as x, y coordinates on the CIE 1931 chromaticity diagram.

Coordinates (x, y) of a CIE 1931 colorimetric system (International Commission on Illumination, 1931) for specifying emission of a light source-containing luminous body may be measured by a fluorescence spectrometer that measures emission spectrum of the luminous body.

Here, the "white color area", when expressed in terms of a color temperature, may be an area that includes approximately 1700K to 27,000K, which is a range through which a Planckian locus of a black body radiator passes.

According to a CIE standard, which is an international standard, the black body radiator is used as a criterion for determining "whiteness" of the light source. In this regard, the black body may be described by temperature and produces light of a specific color. The Planckian locus or a black body locus is a path or a locus in a specific chromaticity space that a color of an incandescent black body moves along as its temperature changes in physics and color science.

Usually, such a glass-ceramic substrate 230 has the dark color, for example, the black color, and has the relatively high transmittance for light of the red wavelength range. Therefore, even when the white light source is used as the lighting, light from the white light source has the red color when transmitted through the glass-ceramic.

For example, even when displaying the cooking information with the white light source, the user may perceive orange, pink, or red light. As such, light undergoes the color change while being transmitted through the glass-ceramic.

As such, in the case of the glass-ceramic substrate, especially the glass with the thermal and strength characteristics used in the electric cooktop, when the white light-emitting diode (white LED) is used to implement white light, because of the optical characteristics of the glass, corresponding light is perceived by the user in the orange or red color. Therefore, most displays in the cooking appliances are composed of the red or orange LEDs.

According to the embodiment of the present disclosure, considering the transmission characteristics of the glass-ceramic substrate 230 and 231 having the relatively high transmittance in the red wavelength band, the light source 260, 270, and 271 that allows white light to be emitted after transmitting the glass-ceramic substrate 230 and 231 is disposed, so that the user may observe the white light display without increased structural complexity or an expensive glass-ceramic substrate.

Therefore, even when using the glass-ceramic substrate 230 and 231 having the relatively high transmittance in the red wavelength band, additional components and/or improvements in the glass are not required, so that the structure may be simplified and the economic feasibility may be improved.

This enables white light to be observed in the display area using the glass-ceramic substrate 230 and 231 with the relatively high transmittance in the red wavelength band, thereby responding to a market demand and enabling white light to be observed in a wide range of display product groups, especially in an electric cooktop market, and thus expanding design possibilities.

The above description is merely an example of the technical idea of the present disclosure, and those with ordinary knowledge in the technical field to which the present disclosure belongs may make various modifications and variations within a range that does not deviate from the essential characteristics of the present disclosure.

Therefore, the embodiments disclosed in the present disclosure are not intended to limit the technical idea of the present disclosure, but to describe the same, and the scope of the technical idea of the present disclosure is not limited by these embodiments.

The scope of protection of the present disclosure should be interpreted by the claims below, and all technical ideas within the equivalent scope should be interpreted as being included in the scope of rights of the present disclosure.

## Claims

1. A cooking appliance having a display area, the cooking appliance comprising:
a light source positioned within the display area and configured to emit light defined by a first coordinate on a CIE chromaticity diagram; and
a glass-ceramic substrate constructed to transmit light emitted from the light source therethrough and emit light defined by a second coordinate on the CIE chromaticity diagram,
wherein the second coordinate is positioned within a white color area on the CIE chromaticity diagram.

2. The cooking appliance of claim 1, wherein the first coordinate is located within a bluegreen (or bluish green) color area on the CIE chromaticity diagram.

3. The cooking appliance of claim 1, wherein the light source includes at least one of a first light source in a form of a point light source and a second light source having a shape capable of representing a number.

4. The cooking appliance of claim 3, wherein the second light source includes:
a reflective layer;
an optical film positioned on the reflective layer and having a slit defined therein with the shape capable of representing the number; and
a light-emitting element positioned at a location corresponding to an area of the slit.

5. The cooking appliance of claim 3, wherein at least one of the first light source and the second light source is located on a circuit board.

6. The cooking appliance of claim 3, wherein the second light source extends through the circuit board.

7. The cooking appliance of claim 1, wherein the glass-ceramic substrate has a relatively high transmittance in a red color band.

8. The cooking appliance of claim 1, wherein the glass-ceramic substrate has a transmittance equal to or higher than 2% at a wavelength equal to or higher than 600nm.

9. The cooking appliance of claim 8, wherein the transmittance increases as the wavelength increases in a wavelength band equal to or higher than 600nm.

10. The cooking appliance of claim 1, wherein the glass-ceramic substrate includes a glass-ceramic exhibiting low-scattering of visible light,
wherein the glass-ceramic includes a single or multiple oxides of groups 5 to 11 of a periodic table of elements, and is a coloring component having a luminous transmittance lower than 80%.

11. The cooking appliance of claim 10, wherein the multiple oxides include at least one of V₂O₅, Cr₂O₃, Fe₂O₃, CoO, NiO, CuO, and MoO₃.

12. The cooking appliance of claim 10, wherein the multiple oxides further include Nd2O3, one of oxides of a lanthanide element, for coloring the multiple oxides.

13. The cooking appliance of claim 1, further comprising a cooking area located on one side of the display area.

14. The cooking appliance of claim 1, wherein the display area includes:
a first display area positioned on a plane the same as a plane of the cooking area; and
a second display area positioned on a plane different from the plane of the cooking area.

15. The cooking appliance of claim 1, wherein the second coordinate (x, y) has one of values of following coordinates (x, y).
| x | y |
|---|---|
| 0.278 | 0.344 |
| 0.31 | 0.349 |
| 0.299 | 0.342 |
| 0.240 | 0.264 |
| 0.363 | 0.355 |
| 0.247 | 0.277 |
| 0.250 | 0.290 |
| 0.2809 | 0.2956 |
| 0.2909 | 0.3229 |
| 0.302 | 0.296 |

16. The cooking appliance of claim 1, wherein the first coordinate (x, y) has one of values of following coordinates (x, y).
| x | y |
|---|---|
| 0.179 | 0.222 |
| 0.181 | 0.269 |
| 0.181 | 0.251 |
| 0.164 | 0.187 |
| 0.210 | 0.274 |
| 0.165 | 0.198 |
| 0.168 | 0.202 |
| 0.172 | 0.2205 |
| 0.1268 | 0.272 |
| 0.174 | 0.200 |
